# FASCICULE DE BREVET EUROPEEN

(11) **EP 4 353 134 B1**
(45) Date de publication et mention de la délivrance du brevet: **16.07.2025**
(21) Numéro de dépôt: 23202522.1
(22) Date de dépôt: 09.10.2023
(51) Int. Cl.: A47J 43/07, B01F 27/1123, B01F 27/90, B01F 35/33, B01F 35/53

(54) **APPAREIL CULINAIRE COMPRENANT UN ELEMENT DE GUIDAGE D'UNE PALE DE BRASSAGE**
KÜCHENGERÄT MIT EINEM FÜHRUNGSELEMENT FÜR EIN RÜHRBLATT
COOKING APPLIANCE COMPRISING A GUIDING ELEMENT FOR A STIRRING BLADE

(30) Priorité: 11.10.2022 FR 2210386
(43) Date de publication de la demande: 17.04.2024
(73) Titulaire: SEB S.A., 69130 Ecully (FR)
(72) Inventeur: DUSSART, Marie, 69134 Ecully Cedex (FR)
(74) Mandataire: SEB Développement

(56) Documents cités:
- WO-A1-2012/080674
- US-A1- 2010 028 514
- US-A1- 2017 347 833
- US-A1- 2017 360 237

## Description

### Domaine de l'invention

La présente invention concerne un appareil culinaire comprenant un élément de guidage d'une pale de brassage.

### Art antérieur

Il est connu d'utiliser un appareil de cuisson permettant de mélanger des aliments. Notamment, l'appareil de cuisson comprend une pale de brassage rapportée sur un fond de la cuve et un dispositif d'entrainement de la pale de brassage en rotation.

Le document WO 2012/080674 décrit un appareil de cuisson d'aliments comprenant une pale de brassage.

Cette disposition donne satisfaction en ce que les aliments sont déplacés à l'intérieur de la cuve.

Pour améliorer le mélange des aliments les uns par rapport aux autres, il est également connu de disposer un obstacle de remuage sur une paroi latérale de la cuve. Les aliments de la périphérie de la cuve sont ralentis en entrant en contact avec l'obstacle de remuage et sont repoussés en direction du centre de la cuve.

L'utilisation d'un obstacle de remuage est ainsi efficace pour mélanger les aliments les uns par rapport aux autres et éviter le déplacement d'ensembles d'aliments agglutinés les uns aux autres.

Pour améliorer le mélange, il est également nécessaire que la pale de brassage soit au plus près de la paroi latérale. Le mouvement de la pale de brassage doit être tel que la pale de brassage contourne l'obstacle de remuage. Le déplacement et le guidage de la pale de brassage constituent donc une difficulté de mise en œuvre car la trajectoire de la pale de brassage comprend un détour pour éviter l'obstacle de remuage.

La présente invention vise à résoudre tout ou partie des inconvénients mentionnés ci-dessus.

### Exposé de l'invention

A cet effet, la présente invention concerne un appareil culinaire comprenant :
une cuve présentant un fond, une ouverture supérieure en regard du fond et une paroi latérale s'étendant depuis le fond jusqu'à l'ouverture supérieure,
un obstacle de remuage rapporté sur la paroi latérale,
un élément de guidage fixe s'étendant sensiblement sur le pourtour de l'ouverture supérieure selon un parcours fermé,
une pale de brassage mobile destinée à brasser des aliments disposés dans la cuve,
un élément de coopération solidaire de la pale de brassage et reliant la pale de brassage à l'élément de guidage, l'élément de coopération étant configuré pour être guidé selon le parcours fermé, le parcours fermé étant conformé pour autoriser le déplacement de la pale de brassage en regard et à proximité d'une première partie de la paroi latérale et pour autoriser le déplacement de la pale de brassage en regard et à distance d'une deuxième partie de la paroi latérale de manière à éviter l'obstacle de remuage, l'obstacle de remuage étant disposé sur la deuxième partie de la paroi latérale.

L'obstacle de remuage est un élément saillant rapporté sur la paroi latérale. L'obstacle de remuage est configuré pour mélanger des aliments présents dans la cuve lorsque la pale de brassage est en mouvement.

L'obstacle de remuage limite le fait que la pale de brassage entraine un bloc d'aliments agglomérés les uns par rapports aux autres, notamment en freinant le mouvement des aliments se trouvant à proximité de la paroi latérale. Les aliments sont donc remués les uns par rapport aux autres grâce aux effets conjugués de la pale de brassage en mouvement et de l'obstacle de remuage fixe.

Au niveau de l'obstacle de remuage, l'élément de guidage présente une trajectoire éloignant la pale de brassage de la paroi latérale.

Cette disposition permet donc d'éviter le contact de la pale de brassage avec l'obstacle de remuage mais également le blocage d'aliments entre la pale de brassage et l'obstacle de remuage.

En dehors de ce décalage, la pale de brassage est proche de la paroi latérale pour améliorer le brassage des aliments. Ainsi, des aliments ne restent pas contre la paroi latérale hors de portée de la pale de brassage.

Selon un aspect de l'invention, la paroi latérale est une surface de révolution autour d'un axe central de la cuve, le parcours fermé présentant une première portion de révolution autour de l'axe central et une deuxième portion complémentaire s'étendant par rapport à l'axe central selon une distance plus courte que dans la première portion.

Cette disposition permet de définir un mouvement de la pale de brassage à une distance fixe de la paroi latérale lors du passage dans la première portion et un mouvement de la pale de brassage à une distance variable de la paroi latérale lors du passage dans la deuxième portion.

La deuxième portion vient faire la liaison avec la première portion pour fermer le parcours. Concernant cette deuxième portion, il y a une première partie dans laquelle la distance à l'axe central diminue depuis une première extrémité de la première portion jusqu'à atteindre l'aplomb de l'obstacle de remuage et une deuxième partie dans laquelle la distance à l'axe central augmente depuis l'aplomb de l'obstacle de remuage jusqu'à une deuxième extrémité de la première portion.

La paroi latérale est une surface de révolution autour d'un axe central de la cuve. Ici, le terme « surface de révolution » concerne la forme générale de la paroi latérale.

Selon un aspect de l'invention, la deuxième portion s'étend entre deux points du parcours fermé, la deuxième portion étant plus proche de l'axe central qu'un arc de cercle passant par les deux points du parcours fermé, ledit arc de cercle étant centré par rapport à l'axe central.

Cette disposition permet à la pale de brassage de se mouvoir à proximité de la paroi latérale puis de s'en éloigner pour éviter l'obstacle de remuage.

Selon un aspect de l'invention, la première portion s'étend entre les deux points du parcours fermé de sorte à former un arc de cercle complémentaire autour de l'axe central.

Selon un aspect de l'invention, la pale de brassage présente une face inférieure apte à coopérer au moins partiellement par contact glissant avec le fond lorsque l'élément de coopération coopère avec l'élément de guidage.

Il apparait ainsi que la pale de brassage n'est pas montée sur un axe traversant le fond et s'étendant selon l'axe central.

La face inférieure présente un point de centrage qui est centré par rapport à l'axe central lors du passage dans la première portion et excentré lors du passage dans la deuxième portion.

Du fait de l'absence d'axe destiné à mettre en mouvement la pale de brassage, le point de centrage n'est pas fixe lors du contournement de l'obstacle de remuage.

L'utilisation d'un élément de guidage permet ainsi le contournement de l'obstacle de remuage sans que la pale de brassage ne subisse de contrainte liée au rétrécissement de la distance entre une extrémité radiale de la pale de brassage et l'axe central.

Selon un aspect de l'invention, la pale de brassage comprend une partie centrale, un organe de remuage et un bras reliant la partie centrale à l'organe de remuage, la partie centrale s'étendant selon une direction d'extension de la partie centrale qui est sensiblement confondue avec l'axe central lors du passage dans la première portion.

La partie centrale peut être plus lourde que l'organe de remuage et le bras. La partie centrale, grâce à son poids, permet de maintenir un contact glissant d'au moins une partie de la face inférieure de la pale de brassage avec le fond. La face inférieure est située pour partie sur la partie centrale et pour partie sur le bras et/ou l'organe de remuage.

L'axe d'extension de la partie centrale se décale de l'axe central tout en restant parallèle à l'axe central lors du passage dans la deuxième portion. L'ensemble de la pale de brassage se déplace sans se déformer lors du passage dans la deuxième portion.

L'organe de remuage a une forme prismatique. Dans le fonctionnement la rotation du bras ramène les aliments vers l'organe de remuage qui va soulever et retourner les aliments en direction de l'axe central.

Selon un aspect de l'invention, l'élément de coopération comprend une patte rapportée sur l'organe de remuage et une accroche apte à coopérer avec l'élément de guidage.

La patte s'étend substantiellement parallèlement à la paroi latérale. De préférence, la patte est rapportée à une extrémité de l'organe de remuage radialement par rapport à l'axe central lorsque l'élément de coopération se trouve dans la première portion de l'élément de guidage.

La pale de brassage est mise en mouvement via son extrémité et non par un axe moteur engendrant un mouvement selon l'axe d'extension de la partie centrale.

Selon un aspect de l'invention, l'élément de guidage présente une rainure apte à coopérer avec l'accroche pour guider l'élément de coopération le long du parcours fermé, l'accroche étant un pion.

La rainure permet ainsi le déplacement de la pale de brassage grâce au guidage de l'élément de coopération.

La face inférieure de la pale de brassage étant en contact avec le fond, la pale de brassage présente sensiblement un seul degré de liberté de déplacement selon le parcours fermé.

Selon un aspect de l'invention, l'appareil culinaire comprend un rebord circulaire apte à être monté sur un bord supérieur de la paroi latérale définissant l'ouverture supérieure, le rebord circulaire étant configuré pour maintenir l'élément de guidage.

Le rebord circulaire est en dehors de la cuve et ne gêne pas l'accès à l'ouverture supérieure pour ajouter ou enlever des aliments de la cuve.

Le rebord circulaire comprend un capot bas monté sur le bord supérieur de l'ouverture supérieure. Le rebord circulaire comprend également un capot haut apte à coopérer avec le capot bas, et un logement circulaire ménagé entre le capot haut et le capot bas pour recevoir et maintenir l'élément de coopération.

Cette disposition permet de maintenir en place et de protéger l'élément de guidage et empêche également l'utilisateur d'entrer en contact avec la zone d'interaction de l'élément de coopération avec l'élément de guidage, notamment lorsque l'élément de coopération est en mouvement relativement à l'élément de guidage.

Selon un aspect de l'invention, le rebord circulaire est monté de manière amovible sur la cuve. De préférence, le capot haut et le capot bas coopèrent de manière amovible. Il est possible de disposer l'élément de coopération de pale de brassage en enlevant puis en remettant le capot haut. Le rebord circulaire et la pale de brassage sont ainsi reliés et peuvent être conjointement installés et désinstallés de la cuve.

Selon un aspect de l'invention, l'appareil culinaire comprend en outre un dispositif d'entrainement de la pale de brassage configuré pour déplacer la pale de brassage autour de l'axe central.

L'entrainement de la pale de brassage est indépendant de son guidage.

Selon un aspect de l'invention, le dispositif d'entrainement comprend une roue dentée libre en rotation autour de l'axe central, un moteur équipé d'un pignon configuré pour entrainer en rotation la roue dentée autour de l'axe central et une attache rapportée sur la roue dentée configurée pour entrainer dans un mouvement de révolution l'élément de coopération autour de l'axe central.

Selon un aspect de l'invention, le rebord circulaire comprend un passage pour le pignon du moteur de manière à permettre l'engrainage du pignon sur la roue dentée.

Selon un aspect de l'invention, le moteur est adossé à la cuve. Le moteur est ainsi excentré et ne gêne pas l'accès à la cuve.

Selon un aspect de l'invention, l'attache est conformée pour autoriser un déplacement en translation selon une direction radiale par rapport à l'axe central de l'élément de coopération relativement à l'attache.

Cette disposition permet la mise en mouvement de la pale de brassage tout le long du parcours fermé, en particulier lors du passage de la deuxième portion du parcours fermé au cours duquel la pale de brassage va s'éloigner à la fois de la roue dentée et de l'obstacle de remuage.

Selon un aspect de l'invention, l'attache présente une fente ou une ouverture oblongue s'étendant radialement par rapport à l'axe central, l'élément de coopération comprenant le pion apte à se déplacer dans la fente ou dans l'ouverture oblongue.

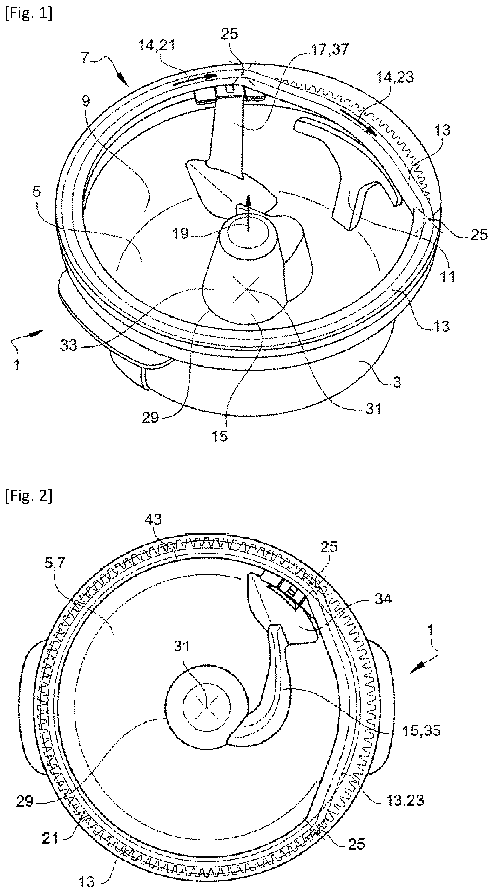

Lors du passage dans la première portion du parcours fermé, le pion ne bouge pas dans la fente ou dans l'ouverture oblongue et lors du passage dans la deuxième portion du parcours fermé et selon la direction de déplacement de la pale de brassage indiquée à la figure 1, le pion se déplace vers l'axe central pour ensuite faire le déplacement inverse dans le but d'éviter l'obstacle de remuage.

En particulier, le pion est apte à se déplacer longitudinalement dans la fente ou l'ouverture oblongue et est inséré par son extrémité dans la rainure de l'élément de guidage.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
La [Fig. 1] est une vue en perspective et en transparence d'un appareil culinaire.
La [Fig. 2] est une vue de dessus et en transparence de l'appareil culinaire.
La [Fig. 3] est une vue de dessus et en transparence d'un détail de l'appareil culinaire.
La [Fig. 4] est également une vue de dessus et en transparence d'un détail de l'appareil culinaire.
La [Fig. 5] est une vue en perspective de l'appareil culinaire.
La [Fig. 6] est une vue de dessus et en transparence de l'appareil culinaire avec un moteur.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

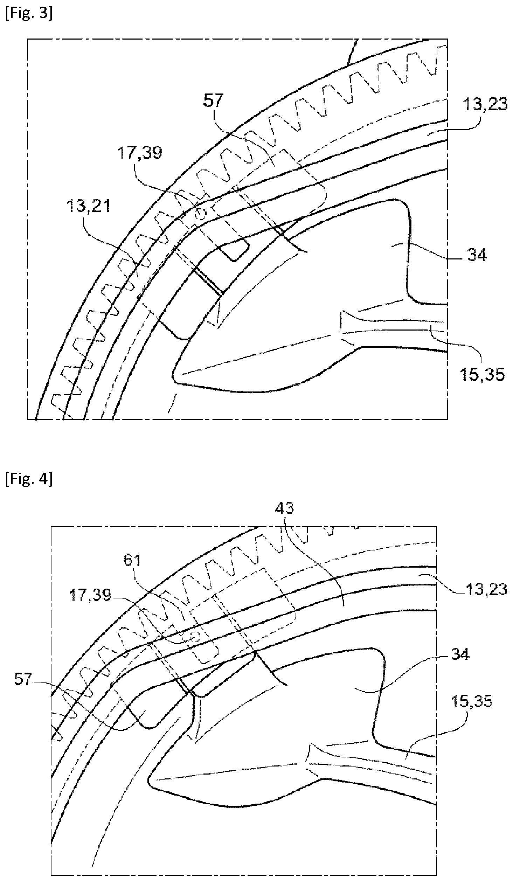

Comme illustré aux figures 1 à 4, un appareil culinaire 1 comprend une cuve 3 présentant un fond 5, une ouverture supérieure 7 en regard du fond 5 et une paroi latérale 9 s'étendant depuis le fond 5 jusqu'à l'ouverture supérieure 7.

L'appareil culinaire 1 comprend un obstacle de remuage 11 rapporté sur la paroi latérale 9, un élément de guidage 13 fixe s'étendant sensiblement sur le pourtour de l'ouverture supérieure 7 selon un parcours fermé 14 et une pale de brassage 15 mobile destinée à brasser des aliments disposés dans la cuve 3.

L'obstacle de remuage 11 est un élément saillant rapporté sur la paroi latérale 9 et s'étendant sensiblement sur toute la hauteur de la paroi latérale 9. L'obstacle de remuage 11 est configuré pour freiner des aliments présents dans la cuve 3 lorsque la pale de brassage 15 est en mouvement.

L'appareil culinaire 1 comprend un élément de coopération 17 solidaire de la pale de brassage 15 et reliant la pale de brassage 15 à l'élément de guidage 13, l'élément de coopération 17 étant configuré pour être guidé selon le parcours fermé 14.

Le parcours fermé 14 est conformé pour autoriser le déplacement de la pale de brassage 15 en regard et à proximité d'une première partie de la paroi latérale 9 et pour autoriser le déplacement de la pale de brassage 15 en regard et à distance d'une deuxième partie de la paroi latérale 9 de manière à éviter l'obstacle de remuage 11, l'obstacle de remuage 11 étant disposé sur la deuxième partie de la paroi latérale 9.

L'élément de guidage 13 définit le mouvement de la pale de brassage 15. Au niveau de l'obstacle de remuage 11, l'élément de guidage 13 présente une trajectoire éloignant la pale de brassage 15 de la paroi latérale 9.

La paroi latérale 9 est une surface de révolution autour d'un axe central 19 de la cuve 3. Le parcours fermé 14 présente une première portion 21 de révolution autour de l'axe central 19 et une deuxième portion 23 complémentaire s'étendant selon une distance par rapport à l'axe central 19 plus courte que dans la première portion 21.

Ici, le terme « surface de révolution » concerne la forme générale de la paroi latérale 9.

La deuxième portion 23 s'étend entre deux points 25 du parcours fermé 14, la deuxième portion 23 étant plus proche de l'axe central 19 qu'un arc de cercle passant par les deux points 25 du parcours fermé 14.

Ledit arc de cercle est centré par rapport à l'axe central 19. La première portion 21 s'étend entre les deux points 25 du parcours fermé 14 de sorte à former un arc de cercle complémentaire autour de l'axe central 19.

La pale de brassage 15 présente une face inférieure 29 apte à coopérer au moins partiellement par contact glissant avec le fond 5 lorsque l'élément de coopération 17 coopère avec l'élément de guidage 13.

Il apparait ainsi que la pale de brassage 15 n'est pas montée sur un axe traversant le fond 5 et s'étendant selon l'axe central 19.

La face inférieure 29 peut présenter un point de centrage 31 qui est centré par rapport à l'axe central 19 lors du passage dans la première portion 21 et excentré lors du passage dans la deuxième portion 23.

Du fait de l'absence d'axe destiné à mettre en mouvement la pale de brassage 15, le point de centrage 31 n'est pas fixe lors du contournement de l'obstacle de remuage 11.

La pale de brassage 15 comprend une partie centrale 33, un organe de remuage 34 et un bras 35 reliant la partie centrale 33 à l'organe de remuage 34, la partie centrale 33 s'étendant selon une direction d'extension de la partie centrale 33 qui est sensiblement confondue avec l'axe central 19 lors du passage dans la première portion 21. Ledit axe d'extension de la partie centrale 33 passe par le point de centrage 31.

La partie centrale 33, grâce à son poids, permet le maintien de la face inférieure 29 en contact avec le fond 5. La face inférieure 29 est située pour partie sur la partie centrale 33 et pour partie sur le bras 35.

L'axe d'extension de la partie centrale 35 se décale de l'axe central 19 tout en restant parallèle à l'axe central 19 lors du passage dans la deuxième portion 23 lorsque le fond 5 est plan. L'ensemble de la pale de brassage 15 se déplace sans se déformer lors du passage dans la deuxième portion 23.

L'élément de coopération 17 comprend une patte 37 rapportée sur l'organe de remuage 34 et une accroche 39 apte à coopérer avec l'élément de guidage 13.

La patte 37 s'étend substantiellement parallèlement à la paroi latérale 9. La patte 37 est rapportée à une extrémité de l'organe de remuage 34 radialement par rapport à l'axe central 19 lorsque l'élément de coopération 17 se trouve dans la première portion de l'élément de guidage 13.

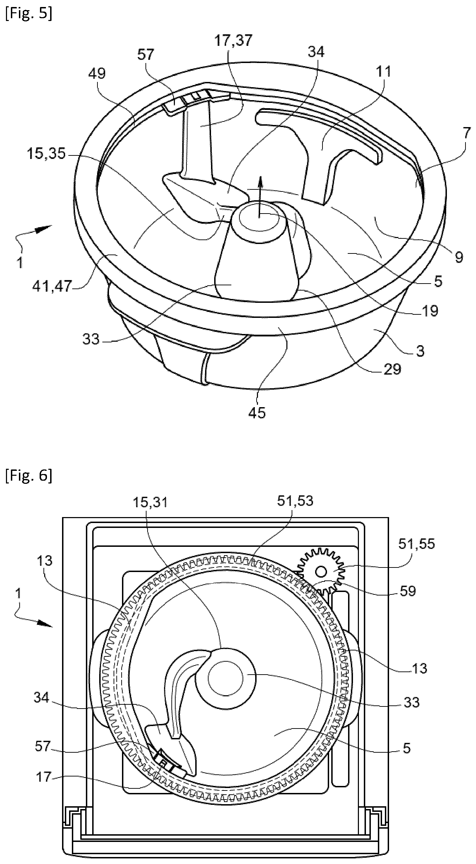

Comme illustré à la figure 5, l'appareil culinaire 1 comprend un rebord circulaire 41 apte à être monté sur un bord supérieur 43 de la paroi latérale 9 définissant l'ouverture supérieure 7, le rebord circulaire 41 étant configuré pour maintenir l'élément de guidage 13.

Le rebord circulaire 41 est en dehors de la cuve 3 et ne gêne pas l'accès à l'ouverture supérieure 7 pour ajouter ou enlever des aliments de la cuve 3.

Le rebord circulaire 41 comprend un capot bas 45 monté sur le bord supérieur 43 de l'ouverture supérieure 7. Le rebord circulaire 41 comprend également un capot haut 47 apte à coopérer avec le capot bas 45.

Un logement 49 circulaire est ménagé entre le capot haut 47 et le capot bas 45 pour recevoir et maintenir l'élément de coopération 17.

Le rebord circulaire 41 est monté de manière amovible sur la cuve 3. Le capot haut 47 et le capot bas 45 coopèrent de manière amovible. Il est possible de disposer l'élément de coopération 17 de la pale de brassage 15 en enlevant puis en remettant le capot haut 47. Le rebord circulaire 41 et la pale de brassage 15 sont ainsi reliés et peuvent être conjointement installés et désinstallés de la cuve 3.

L'élément de guidage 13 présente une rainure apte à coopérer avec l'accroche 39 pour guider l'élément de coopération 17 le long du parcours fermé, l'accroche 39 étant un pion.

La face inférieure 29 de la pale de brassage 15 étant en contact avec le fond 5, la pale de brassage 15 présente un seul degré de liberté de déplacement selon le parcours fermé 14.

Comme illustré à la figure 6, l'appareil culinaire 1 comprend en outre un dispositif d'entrainement 51 de la pale de brassage 15 configuré pour déplacer la pale de brassage 15 autour de l'axe central 19. L'entrainement de la pale de brassage 15 est indépendant de son guidage.

Le dispositif d'entrainement 51 comprend une roue dentée 53 libre en rotation autour de l'axe central 19, un moteur 55 équipé d'un pignon configuré pour entrainer la roue dentée 53 autour de l'axe central 19 et une attache 57 rapportée sur la roue dentée 53 configurée pour entrainer dans un mouvement de révolution l'élément de coopération 17 autour de l'axe central 19.

Le rebord circulaire 41 comprend un passage 59 pour le pignon du moteur 55 de manière à permettre l'engrenage du pignon sur la roue dentée 53.

Le moteur 55 est adossé à la cuve 3. Le moteur est ainsi excentré et ne gêne pas l'accès à la cuve 3.

L'attache 57 est conformée pour autoriser un déplacement en translation selon une direction radiale par rapport à l'axe central 19 de l'élément de coopération 17 relativement à l'attache 57.

Cela permet la mise en mouvement de la pale de brassage 15 le long du parcours fermé, en particulier lors du passage de la deuxième portion du parcours fermé au cours duquel la pale de brassage va s'éloigner à la fois de la roue dentée 53 et de l'obstacle de remuage.

L'attache 57 présente une fente 61 ou une ouverture oblongue s'étendant radialement par rapport à l'axe central 19, l'élément de coopération 17 comprenant le pion apte à se déplacer dans la fente 61 ou dans l'ouverture oblongue.

Lors du passage dans la première portion 21 du parcours fermé, le pion ne bouge pas dans la fente 61 ou dans l'ouverture oblongue et lors du passage dans la deuxième portion 23 du parcours fermé et selon la direction de déplacement de la pale de brassage indiquée à la figure 1, le pion se déplace vers l'axe central 19 pour ensuite faire le déplacement inverse dans le but d'éviter l'obstacle de remuage.

Le pion est apte à se déplacer longitudinalement dans la fente 61 ou l'ouverture oblongue et est inséré par son extrémité dans la rainure de l'élément de guidage 13.

L'appareil culinaire 1 décrit ci-dessus est avantageux car la pale de brassage 15 contourne l'obstacle de remuage 11. Ceci réduit le risque de coincement d'aliment entre la pale de brassage 15 et l'obstacle de remuage 11. Les aliments sont ainsi moins endommagés et présentent un aspect acceptable pour l'utilisateur.

Le contournement ne requiert pas d'élément complexe de type ressort et est ainsi réalisé de manière fiable.

Comme il va de soi, l'invention ne se limite pas à la seule forme d'exécution décrite ci-dessus à titre d'exemple, elle en embrasse au contraire toutes les variantes de réalisation couvertes par les revendications.

## Revendications

1. Appareil culinaire (1) comprenant :
- une cuve (3) présentant un fond (5), une ouverture supérieure (7) en regard du fond (5) et une paroi latérale (9) s'étendant depuis le fond (5) jusqu'à l'ouverture supérieure (7),
- un obstacle de remuage (11) rapporté sur la paroi latérale (9),
- une pale de brassage (15) mobile destinée à brasser des aliments disposés dans la cuve (3),
l'appareil culinaire (1) étant **caractérisé par**:
- un élément de guidage (13) fixe s'étendant sensiblement sur le pourtour de l'ouverture supérieure (7) selon un parcours fermé (14),
- un élément de coopération (17) solidaire de la pale de brassage (15) et reliant la pale de brassage (15) à l'élément de guidage (13), l'élément de coopération (17) étant configuré pour être guidé selon le parcours fermé (14), le parcours fermé (14) étant conformé pour autoriser le déplacement de la pale de brassage (15) en regard et à proximité d'une première partie de la paroi latérale (9) et pour autoriser le déplacement de la pale de brassage (15) en regard et à distance d'une deuxième partie de la paroi latérale (9) de manière à éviter l'obstacle de remuage (11), l'obstacle de remuage (11) étant disposé sur la deuxième partie de la paroi latérale (9).

2. Appareil culinaire (1) selon la revendication 1, dans lequel la paroi latérale (9) est une surface de révolution autour d'un axe central (19) de la cuve (3), le parcours fermé (14) présentant une première portion (21) de révolution autour de l'axe central (19) et une deuxième portion (23) complémentaire s'étendant par rapport à l'axe central (19) selon une distance plus courte que dans la première portion (21).

3. Appareil culinaire (1) selon la revendication 2, dans lequel la deuxième portion (23) s'étend entre deux points (25) du parcours fermé (14), la deuxième portion (23) étant plus proche de l'axe central (19) qu'un arc de cercle passant par les deux points (25) du parcours fermé (14), ledit arc de cercle étant centré par rapport à l'axe central (19).

4. Appareil culinaire (1) selon l'une des revendications 2 ou 3, dans lequel la pale de brassage (15) présente une face inférieure (29) apte à coopérer au moins partiellement par contact glissant avec le fond (5) lorsque l'élément de coopération (17) coopère avec l'élément de guidage (13).

5. Appareil culinaire (1) selon la revendication 4, dans lequel la pale de brassage (15) comprend une partie centrale (33), un organe de remuage (34) et un bras (35) reliant la partie centrale (33) à l'organe de remuage (34), la partie centrale (33) s'étendant selon une direction d'extension de la partie centrale (33) qui est sensiblement confondue avec l'axe central (19) lors du passage dans la première portion (21).

6. Appareil culinaire (1) selon la revendication 5, dans lequel l'élément de coopération (17) comprend une patte (37) rapportée sur l'organe de remuage (34) et une accroche (39) apte à coopérer avec l'élément de guidage (13).

7. Appareil culinaire (1) selon la revendication 6, dans lequel l'élément de guidage (13) présente une rainure apte à coopérer avec l'accroche (39) pour guider l'élément de coopération (17) le long du parcours fermé, l'accroche (39) étant un pion.

8. Appareil culinaire (1) selon l'une des revendications 2 à 7, comprenant un rebord circulaire (41) apte à être monté sur un bord supérieur (43) de la paroi latérale (9) définissant l'ouverture supérieure (7), le rebord circulaire (41) étant configuré pour maintenir l'élément de guidage (13).

9. Appareil culinaire (1) selon l'une des revendications 2 à 8 lorsqu'elles dépendent de la revendication 2, comprenant en outre un dispositif d'entrainement (51) de la pale de brassage (15) configuré pour déplacer la pale de brassage (15) autour de l'axe central (19).

10. Appareil culinaire (1) selon la revendication 9, dans lequel le dispositif d'entrainement (51) comprend une roue dentée (53) libre en rotation autour de l'axe central (19), un moteur (55) équipé d'un pignon configuré pour entrainer en rotation la roue dentée (53) autour de l'axe central (19) et une attache (57) rapportée sur la roue dentée (53) configurée pour entrainer dans un mouvement de révolution l'élément de coopération (17) autour de l'axe central (19).

11. Appareil culinaire (1) selon la revendication 10, dans lequel l'attache (57) est conformée pour autoriser un déplacement en translation selon une direction radiale par rapport à l'axe central (19) de l'élément de coopération (17) relativement à l'attache (57).

12. Appareil culinaire (1) selon la revendication 11 en combinaison de la revendication 7, dans lequel l'attache (57) présente une fente (61) ou une ouverture oblongue s'étendant radialement par rapport à l'axe central (19), l'élément de coopération (17) comprenant le pion apte à se déplacer dans la fente (61) ou dans l'ouverture oblongue.

## Patentansprüche

1. Küchengerät (1), umfassend:
- einen Behälter (3), der einen Boden (5), eine dem Boden (5) zugewandte obere Öffnung (7) und eine Seitenwand (9) aufweist, die sich vom Boden (5) bis zur oberen Öffnung (7) erstreckt,
- ein Rüttelhindernis (11), das an der Seitenwand (9) angebracht ist,
- ein bewegliches Rührblatt (15), das dazu bestimmt ist, im Behälter (3) angeordnete Lebensmittel zu rühren, wobei das Küchengerät (1) **gekennzeichnet ist durch**:
- ein festes Führungselement (13), das sich im Wesentlichen am Umfang der oberen Öffnung (7) in einer geschlossenen Bahn (14) erstreckt,
- ein Zusammenwirkungselement (17), das fest mit dem Rührblatt (15) verbunden ist und das Rührblatt (15) mit dem Führungselement (13) verbindet, wobei das Zusammenwirkungselement (17) so konfiguriert ist, dass es in der geschlossenen Bahn (14) geführt wird, wobei die geschlossene Bahn (14) so angepasst ist, dass sie die Bewegung des Rührblatts (15) einem ersten Teil der Seitenwand (9) zugewandt und nahe desselben ermöglicht, und die Bewegung des Rührblatts (15) einem zweiten Teil der Seitenwand (9) zugewandt und von diesem beabstandet ermöglicht, um das Rüttelhindernis (11) zu umgehen, wobei das Rüttelhindernis (11) am zweiten Teil der Seitenwand (9) angeordnet ist.

2. Küchengerät (1) nach Anspruch 1, wobei die Seitenwand (9) eine Rotationsfläche um eine Mittelachse (19) des Behälters (3) ist, wobei die geschlossene Bahn (14) einen ersten Rotationsabschnitt (21) um die Mittelachse (19), und einen zweiten komplementären Abschnitt (23) aufweist, der sich in Bezug auf die Mittelachse (19) in einem kürzeren Abstand als im ersten Abschnitt (21) erstreckt.

3. Küchengerät (1) nach Anspruch 2, wobei sich der zweite Abschnitt (23) zwischen zwei Punkten (25) der geschlossenen Bahn (14) erstreckt, wobei der zweite Abschnitt (23) näher an der Mittelachse (19) liegt als ein Kreisbogen, der durch die zwei Punkte (25) der geschlossenen Bahn (14) verläuft, wobei der Kreisbogen in Bezug auf die Mittelachse (19) zentriert ist.

4. Küchengerät (1) nach einem der Ansprüche 2 oder 3, wobei das Rührblatt (15) eine untere Seite (29) aufweist, die geeignet ist, mindestens teilweise durch Gleitkontakt mit dem Boden (5) zusammenzuwirken, wenn das Zusammenwirkungselement (17) mit dem Führungselement (13) zusammenwirkt.

5. Küchengerät (1) nach Anspruch 4, wobei das Rührblatt (15) einen Mittelteil (33), ein Rüttelorgan (34) und einen Arm (35) umfasst, der den Mittelteil (33) mit dem Rüttelorgan (34) verbindet, wobei sich der Mittelteil (33) in einer Erstreckungsrichtung des Mittelteils (33) erstreckt, die beim Verlauf im ersten Abschnitt (21) im Wesentlichen mit der Mittelachse (19) zusammenfällt.

6. Küchengerät (1) nach Anspruch 5, wobei das Zusammenwirkungselement (17) einen am Rüttelorgan (34) angebrachten Reiter (37) und einen Haken (39) umfasst, der geeignet is, mit dem Führungselement (13) zusammenzuwirken.

7. Küchengerät (1) nach Anspruch 6, wobei das Führungselement (13) eine Nut aufweist, die geeignet ist, mit dem Haken (39) zusammenzuwirken, um das Zusammenwirkungselement (17) entlang der geschlossenen Bahn zu führen, wobei der Haken (39) ein Zapfen ist.

8. Küchengerät (1) nach einem der Ansprüche 2 bis 7, das eine kreisförmige Kante (41) umfasst, die an einem oberen Rand (43) der Seitenwand (9), welcher die obere Öffnung (7) definiert, geeignet ist, wobei die kreisförmige Kante (41) so konfiguriert ist, dass sie das Führungselement (13) hält.

9. Küchengerät (1) nach einem der Ansprüche 2 bis 8 in Abhängigkeit von Anspruch 2, das weiter eine Antriebsvorrichtung (51) für das Rührblatt (15) umfasst, die so konfiguriert ist, dass sie das Rührblatt (15) um die Mittelachse (19) bewegt.

10. Küchengerät (1) nach Anspruch 9, wobei die Antriebsvorrichtung (51) ein Zahnrad (53), das sich frei um die Mittelachse (19) drehen kann, einen Motor (55), der mit einem Ritzel ausgestattet ist, das so konfiguriert ist, dass es das Zahnrad (53) um die Mittelachse (19) drehend antreibt, und eine am Zahnrad (53) angebrachte Halterung (57) umfasst, die so konfiguriert ist, dass sie das Zusammenwirkungselement (17) in einer Drehbewegung um die Mittelachse (19) antreibt.

11. Küchengerät (1) nach Anspruch 10, wobei die Halterung (57) so ausgestaltet ist, dass sie eine Verschiebebewegung in einer radialen Richtung in Bezug auf die Mittelachse (19) des Zusammenwirkungselements (17) relativ zur Halterung (57) ermöglicht.

12. Küchengerät (1) nach Anspruch 11 in Kombination mit Anspruch 7, wobei die Halterung (57) einen Schlitz (61) oder eine längliche Öffnung aufweist, die sich radial in Bezug auf die Mittelachse (19) erstreckt, wobei das Zusammenwirkungselement (17) den Zapfen umfasst, der geeignet ist, in dem Schlitz (61) oder in der länglichen Öffnung zu bewegen.

## Claims

1. Cooking appliance (1) comprising:
- a vessel (3) having a bottom (5), an upper opening (7) facing the bottom (5) and a side wall (9) extending from the bottom (5) to the upper opening (7),
- a stirring obstacle (11) mounted on the side wall (9),
- a movable stirring blade (15) intended to stir food disposed in the vessel (3), the cooking appliance (1) being **characterised by**:
- a fixed guiding element (13) extending substantially over the perimeter of the upper opening (7) along a closed route (14),
- an engagement element (17) secured to the stirring blade (15) and connecting the stirring blade (15) to the guiding element (13), the engagement element (17) being configured to be guided along the closed route (14), the closed route (14) being shaped to enable the movement of the stirring blade (15) facing and in the proximity of a first part of the side wall (9), and to enable the movement of the stirring blade (15) facing and at a distance from a second part of the side wall (9), so as to avoid the stirring obstacle (11), the stirring obstacle (11) being disposed on the second part of the side wall (9).

2. Cooking appliance (1) according to claim 1, wherein the side wall (9) is a surface of revolution around a central axis (19) of the vessel (3), the closed route (14) having a first portion (21) revolving about the central axis (19) and a second complementary portion (23) extending with respect to the central axis (19) along a shorter distance than in the first portion (21).

3. Cooking appliance (1) according to claim 2, wherein the second portion (23) extends between two points (25) of the closed route (14), the second portion (23) being closer to the central axis (19) than a circular arc passing through the two points (25) of the closed route (14), said circular arc being centred with respect to the central axis (19).

4. Cooking appliance (1) according to any one of claims 2 or 3, wherein the stirring blade (15) has a lower face (29), capable of engaging at least partially by sliding contact with the bottom (5), when the engagement element (17) engages with the guiding element (13).

5. Cooking appliance (1) according to claim 4, wherein the stirring blade (15) comprises a central part (33), a stirring member (34) and an arm (35) connecting the central part (33) to the stirring member (34), the central part (33) extending along an extension direction of the central part (33) which is substantially combined with the central axis (19) during the passage into the first portion (21).

6. Cooking appliance (1) according to claim 5, wherein the engagement element (17) comprises a tab (37) mounted on the stirring member (34) and a hook (39) capable of engaging with the guiding element (13).

7. Cooking appliance (1) according to claim 6, wherein the guiding element (13) has a groove capable of engaging with the hook (39) to guide the engagement element (17) along the closed route, the hook (39) being a pin.

8. Cooking appliance (1) according to any one of claims 2 to 7, comprising a circular rim (41) capable of being mounted on an upper edge (43) of the side wall (9) defining the upper opening (7), the circular rim (41) being configured to hold the guiding element (13).

9. Cooking appliance (1) according to any one of claims 2 to 8, when they depend on claim 2, further comprising a device (51) for driving the stirring blade (15) configured to move the stirring blade (15) about the central axis (19).

10. Cooking appliance (1) according to claim 9, wherein the drive device (51) comprises a gearwheel (53) which rotates freely about the central axis (19), a motor (55) equipped with a pinion configured to rotate the gearwheel (53) about the central axis (19) and a clip (57) mounted on the gearwheel (53) configured to drive, in a revolving movement, the engagement element (17) about the central axis (19).

11. Cooking appliance (1) according to claim 10, wherein the clip (57) is shaped to enable a translational movement along a radial direction with respect to the central axis (19) of the engagement element (17) relative to the clip (57).

12. Cooking appliance (1) according to claim 11 combined with claim 7, wherein the clip (57) has a slot (61) or an oblong opening extending radially with respect to the central axis (19), the engagement element (17) comprising the pin capable of moving into the slot (61) or into the oblong opening.
